# EUROPEAN PATENT SPECIFICATION

(11) **EP 3 543 100 B1**
(45) Date of publication and mention of the grant of the patent: **26.05.2021**
(21) Application number: 19163632.3
(22) Date of filing: 19.03.2019
(51) Int. Cl.: B62J 25/00, B62J 35/00, B62J 37/00, B62K 11/04, B62M 7/02, B62M 7/06

(54) **FUEL TANK ARRANGEMENT UNDER THE STEP FLOOR OF SADDLE VEHICLE**
TANKANORDNUNG UNTER DEM TRITTBODEN EINES SATTELFAHRZEUGS
AGENCEMENT DU RÉSERVOIR DE CARBURANT SOUS LE REPOSE-PIED D'UN VÉHICULE À ENFOURCHER

(30) Priority: 23.03.2018 JP 2018056727
(43) Date of publication of application: 25.09.2019
(73) Proprietor: Honda Motor Co., Ltd., Tokyo 107-8556 (JP)
(72) Inventor: HOSOYA, Takumi, Saitama, 351-0193 (JP)
(74) Representative: Kiwit, Benedikt

(56) References cited:
- EP-A1- 2 167 367
- EP-A2- 2 305 544
- US-A1- 2012 181 101

## Description

### BACKGROUND

### 1. Technical Field

The present invention relates to saddled vehicles, and more particularly relates to a saddled vehicle including a low-floor type floor (hereinafter called a step floor) between a steering handle and a seat such that a rider can ride on the vehicle while closing the legs on the step floor.

### 2. Description of the Background

A conventional scooter-type saddled vehicle includes a step floor between a steering handle and a seat such that a rider can ride on the vehicle while closing the legs on the step floor.

JP 5 049 645 B2 discloses a scooter-type motorcycle including a fuel tank under the step floor. Such a position of the fuel tank can lower the center of gravity of the vehicle body easily as compared with a motorcycle including a fuel tank under the seat, and can widen the storage space under the seat.

EP 2 305 544 A2, featuring the preamble of claim 1, discloses a scooter-type vehicle comprising a step floor between a steering handle and a seat such that the rider can place the legs on the step floor, and a fuel tank disposed under the step floor, wherein the fuel tank is disposed between a pair of frame members in the width direction, the pair of frame members partially extending under the step floor in the front-rear direction. The fuel tank has a fuel pump inserted into it from above. The fuel pump is fixed to the fuel tank via a flange. The upper end of the fuel pump is located above the lowest point of the frame members but below the highest point of the frame members. The pump is inclined forwardly. The fuel tank includes an upper half body and a lower half body that are bonded at a flange. US 2012 / 181 101 A2 discloses a fuel tank support structure for a saddle-type vehicle and a body frame incorporating the fuel tank support structure. WO 2010 / 013 479 A1 discloses a scooter type vehicle.

### BRIEF SUMMARY

The fuel tank disclosed in JP 5 049 645 B2 is sandwiched between a pair of left and right under frames extending below the step floor. The fuel tank includes a fuel pump to pressure-feed fuel to the carburettor, and the upper end of the fuel pump protrudes from the upper face of the fuel tank and is located at a rear part of the upper face. Such a motorcycle has a problem that there is a limit to lower the step floor to protect the fuel pump, because load may be applied to the step floor from the above.

To solve the problem of the conventional techniques, the present invention aims to provide a motorcycle capable of lowering the step floor while placing a fuel tank under the step floor.

To achieve the aim, a first aspect of the present embodiment provides a saddled vehicle (1) including:
a step floor (11) between a steering handle (5) and a seat (13) such that a rider can place the legs on the step floor (11); and
a fuel tank (70) disposed under the step floor (11), wherein
the fuel tank (70) is disposed between a pair of frame members (34) in the width direction, the pair of frame members (34) extending under the step floor (11) in the front-rear direction,
the fuel tank (70) has an opening (74) at an upper part to insert a body (92) of a fuel pump (90),
the fuel pump (90) has an upper end (91) fixed to a peripheral part (75) of the opening (74), and
   the upper end (91) of the fuel pump (90) is located below the upper face (34a) of the frame members (34) in side view of a vehicle body.

Further according to the first aspect of the present invention, the fuel tank (70) includes an upper half body (UC) and a lower half body (DC) that are bonded at a flange face (G).

A second aspect of the present invention provides that the flange face (G) intersects an axial line (C) of the frame members (34) in side view of the vehicle body.

A third aspect of the present invention provides that the intersection (X) of the flange face (G) and the axial line (C) of the frame members (34) is located substantially at a center of dimension (T) of the fuel tank (70) in the front-rear direction.

Further according to the first aspect of the present invention, the body (92) of the fuel pump (90) is inclined relative to the vertical direction in side view of the vehicle body.

Further according to the first aspect of the present invention, the body (92) of the fuel pump (90) is inclined in side view of the vehicle body so that the lower part of the body (92) is located closer to the front end of the vehicle body than the upper part of the body (92),
the flange face (G) of the fuel tank (70) is inclined downward toward the rear of the vehicle body in side view of the vehicle body, and
the frame members (34) are inclined upward toward the rear of the vehicle body in side view of the vehicle body.

A fourth aspect of the present invention provides that the space between the pair of frame members (34) in the width direction of the vehicle decreases toward the rear of the vehicle body, and
the dimension of the fuel tank (70) in the width direction of the vehicle decreases toward the rear of the vehicle body.

A fifth aspect of the present invention provides that the opening (74) for insertion of the fuel pump (90) is located above the flange face (G) in side view of the vehicle body.

According to the first aspect, a saddled vehicle (1) includes: a step floor (11) between a steering handle (5) and a seat (13) such that a rider can place the legs on the step floor (11); and a fuel tank (70) disposed under the step floor (11), wherein the fuel tank (70) is disposed between a pair of frame members (34) in the width direction, the pair of frame members (34) extending under the step floor (11) in the front-rear direction, the fuel tank (70) has an opening (74) at an upper part to insert a body (92) of a fuel pump (90), the fuel pump (90) has an upper end (91) fixed to a peripheral part (75) of the opening (74), and the upper end (91) of the fuel pump (90) is located below the upper face (34a) of the frame members (34) in side view of a vehicle body. In this way, the upper end of the fuel pump does not protrude above from the frame members, and so the step floor can be lowered. More specifically if the upper end of the fuel pump protrudes above from the frame members, a structure to receive the load applied to the step floor has to be added to protect the upper end of the fuel pump, and so this may heighten the position of the step floor. The upper end of the fuel pump of the present invention is located below the upper faces of the frame members, and so the frame members can receive load applied to the step floor, and the step floor can be brought closer to the fuel tank.

According to the first and second aspect, the fuel tank (70) includes an upper half body (UC) and a lower half body (DC) that are bonded at a flange face (G), and the flange face (G) intersects an axial line (C) of the frame members (34) in side view of the vehicle body. This makes the upper part of the fuel tank located below the upper faces of the frame members at one part and located above the upper faces of the frame members at the other part. In this way, the capacity of the fuel tank can increase on the latter part.

According to the third aspect, the intersection (X) of the flange face (G) and the axial line (C) of the frame members (34) is located substantially at a center of dimension (T) of the fuel tank (70) in the front-rear direction. This can lengthen the part of the fuel tank where the upper part of the fuel tank is located above the upper faces of the frame members, and so the fuel tank can have enough capacity.

Further according to the first aspect, the body (92) of the fuel pump (90) is inclined relative to the vertical direction in side view of the vehicle body. This can reduce the dimension of the fuel pump in the vertical direction and can accommodate the fuel pump in a low-profile fuel tank. This can decrease the thickness of the step floor and so can improve the appearance of the motorcycle. This also can lower the step floor and can increase the riding performance of the motorcycle.

Further according to the first aspect, the body (92) of the fuel pump (90) is inclined in side view of the vehicle body so that the lower part of the body (92) is located closer to the front end of the vehicle body than the upper part of the body (92), the flange face (G) of the fuel tank (70) is inclined downward toward the rear of the vehicle body in side view of the vehicle body, and the frame members (34) are inclined upward toward the rear of the vehicle body in side view of the vehicle body. In this way, the fuel tank can have enough capacity at a front part, and the frame members can protect the upper end of the fuel pump at a rear part of the fuel tank.

According to the fourth aspect, the space between the pair of frame members (34) in the width direction of the vehicle decreases toward the rear of the vehicle body, and the dimension of the fuel tank (70) in the width direction of the vehicle decreases toward the rear of the vehicle body. In this way, the fuel tank can increase the capacity at a part close to the front end of the vehicle body. Such increased capacity of the fuel tank at a front part of the vehicle body can increase the front-wheel load, which tends to be smaller in a scooter-type motorcycle, to optimize the weight distribution between the front and the rear of the vehicle.

According to the fifth aspect, the opening (74) for insertion of the fuel pump (90) is located above the flange face (G) in side view of the vehicle body. This can facilitate the manufacturing of a die for press-forming of the upper half body of the fuel tank as compared with the configuration having an opening to insert the fuel pump that is located below the flange face, and can increase the productivity of the fuel tank.

### BRIEF DESCRIPTION OF DRAWINGS

FIG. 1 is a left side view of a motorcycle according to one embodiment of the present invention.
FIG. 2 is a front view of the motorcycle.
FIG. 3 is a perspective view of the vehicle body frame of the motorcycle.
FIG. 4 is a left side view of the vehicle body frame.
FIG. 5 is a front view of the vehicle body frame.
FIG. 6 is a plan view of the vehicle body frame.
FIG. 7 is a perspective view of a fuel tank.
FIG. 8 is a left side view of the fuel tank.
FIG. 9 is a plan view of the fuel tank.
FIG. 10 is a left side view of the attachment structure of the fuel tank.
FIG. 11 is a perspective view of the attachment structure of the fuel tank viewed from the rear of the vehicle body.
FIG. 12 is a perspective view of the attachment structure of the fuel tank viewed from the side of the vehicle body.

### DETAILED DESCRIPTION

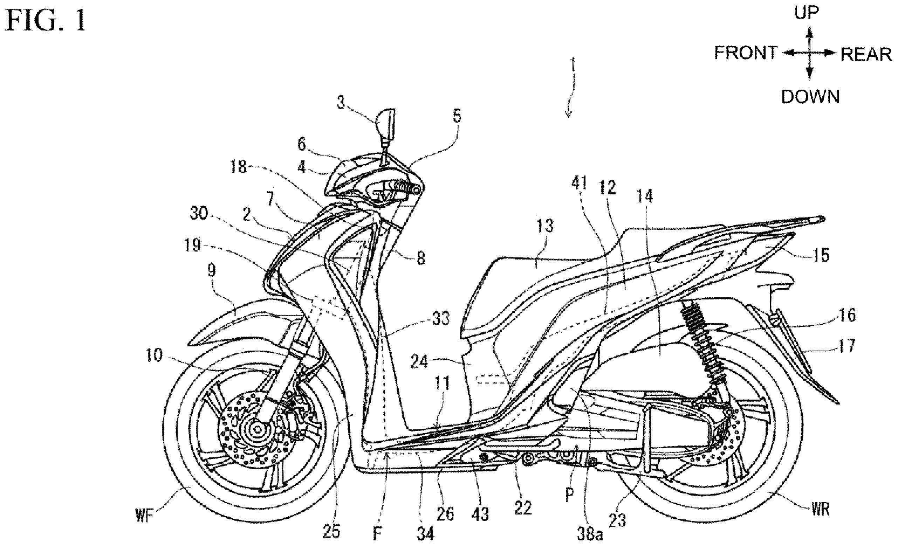

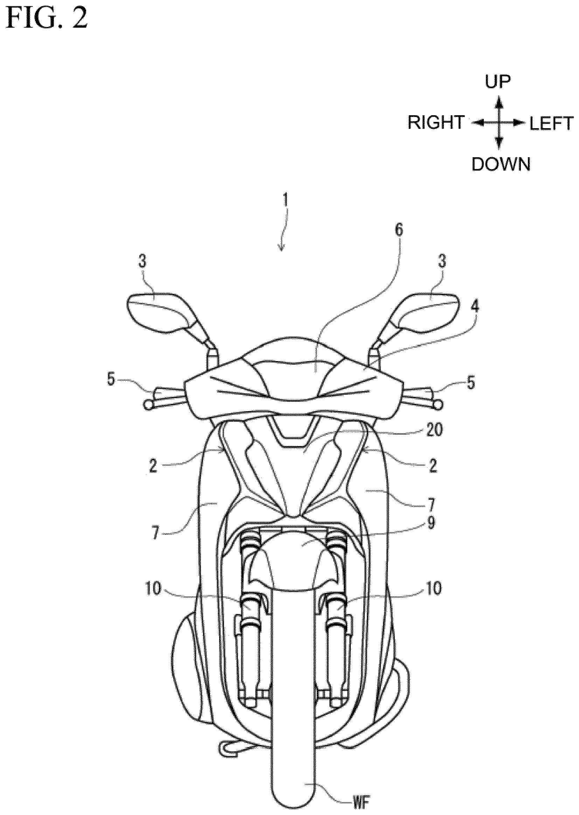

The following describes a preferred embodiment of the present invention in details with reference to the drawings. FIG. 1 is a left side view of a motorcycle 1 according to one embodiment of the present invention. FIG. 2 is a front view of the motorcycle 1. The motorcycle 1 is a scooter-type saddled vehicle, and includes a step floor 11 between a steering handle 5 and a seat 13 such that a rider can place the legs on the step floor 11. The vehicle body frame F includes a head pipe 30 at the front end, and the head pipe 30 pivotablly supports a steering stem 18. The steering stem 18 fixes a bottom bridge 19 at the lower end and the steering handle 5 at the upper end. The bottom bridge 19 supports front forks 10 that support a front wheel WF rotatably. The steering handle 5 extends in the width direction of the vehicle. The steering handle 5 is covered with a headlight cover 4 at the front and the rear, and the headlight cover 4 supports a headlight 6 and a pair of left and right rearview mirrors 3.

The motorcycle includes a center cowl 20 below the headlight cover 4, and a lighting unit 2 on both sides of the center cowl 20. The lighting unit 2 includes a position light and winker lights integrally. A pair of left and right front side covers 7 is disposed on the outside of the lighting unit 2 in the width direction of the vehicle. An underside cover 25 continues to the lower part of each front side cover 7 and extends below the step floor 11 to continue to an under cowl 26 at a center in the width direction of the vehicle. The motorcycle includes a floor panel 8 behind the front side cover 7 so as to face the legs of a rider.

A pair of left and right front frames 33 joins to the rear face of the head pipe 30. These front frames 33 firstly extend substantially downward and then bend at a steep angle toward the rear of the vehicle body so as to continue to under frames 34. The under frames 34 join with a pair of left and right rear frames 41 at the rear part, and the rear frames 41 are covered with a rear cowl 12. A bracket 43 is attached to the left under frame 34 in the width direction of the vehicle, and the bracket 43 supports a side stand 22. A tandem step 38a is disposed on the upper rear of the side stand 22, and the tandem step 38a is foldable toward the vehicle body for storage.

A part under the seat 13 is covered with a seat panel 24. The motorcycle includes a power unit P that is swingably supported at the rear end of the under frames 34. The power unit P is of a unit swing type including an engine and a transmission integrally. The power unit P supports a rear wheel WR as the drive wheel rotatably, and the rear end of the power unit P is suspended from the rear frame 41 via a rear cushion 16. The motorcycle also includes an air cleaner box 14 above the power unit P and a main stand 23 below the power unit P. The main stand 23 is pivotablly supported. The motorcycle includes a rear lighting unit 15 including a tail light and winker lights integrally at the rear end of the rear cowl 12, and includes a rear fender 17 below the rear lighting unit 15.

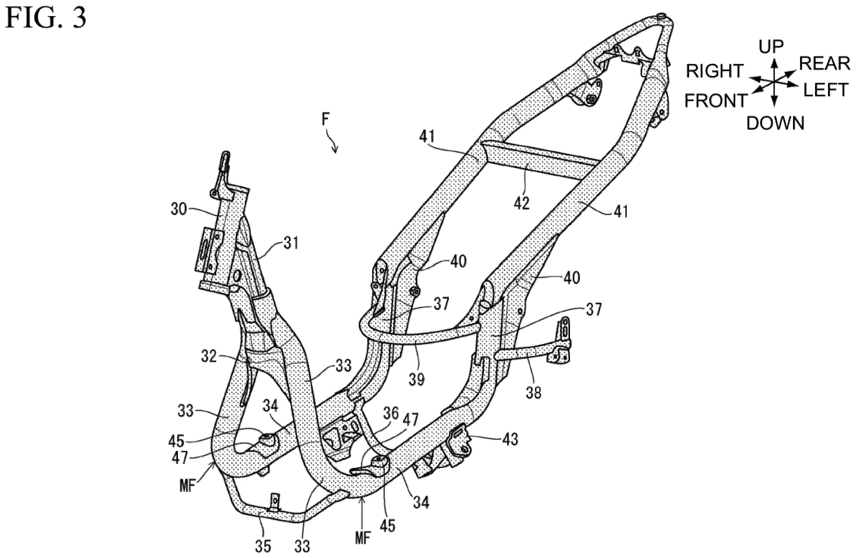

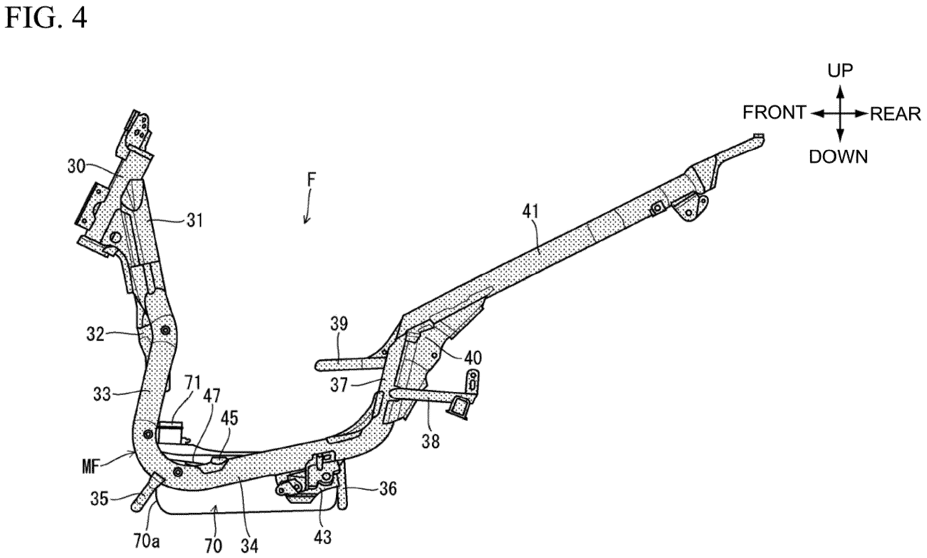

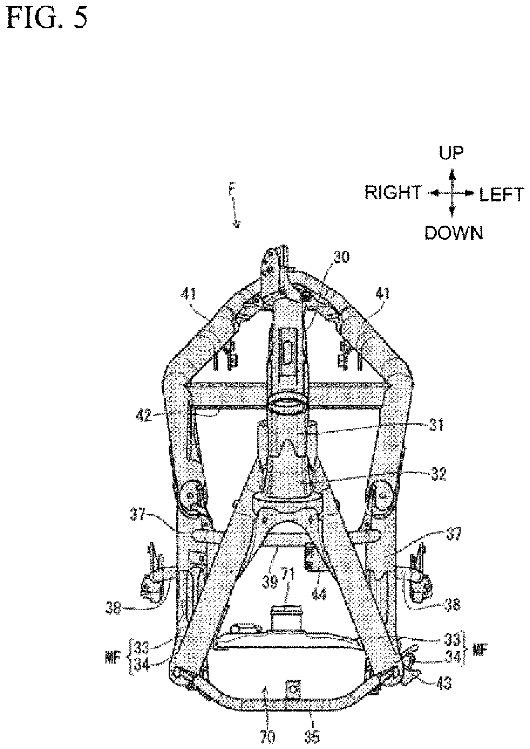

FIG. 3 is a perspective view of the vehicle body frame F of the motorcycle 1. FIG. 4 is a left side view of the vehicle body frame F and FIG. 5 is a front view of the vehicle body frame F. FIGs. 4 and 5 show the fuel tank 70 attached to the vehicle body frame. A center pipe 31 is welded to the rear face of the head pipe 30, and extends rearward and downward. A pair of left and right main frames MF is welded to both sides of the center pipe 31 in the width direction of the vehicle. The main frames MF include front frames 33 extending forward and downward of the vehicle body under the center pipe 31 and the under frames 34 extending rearward and upward of the vehicle body from the lower part of the front frames 33, and these parts of the main frames MF are manufactured by bending a single round pipe. To increase the mutual coupling rigidity, a gusset 32 is welded between the lower part of the center pipe 31 and the inner lateral face of each front frame 33 in the width direction of the vehicle.

The vehicle body frame includes a first cross pipe 35 and a second cross pipe 36 between the left and right main frames MF. The first cross pipe 35 bends and joins the left and right main frames MF in front of the fuel tank 70, and the second cross pipe 36 bends and joins the left and right main frames MF behind the fuel tank 70. Each under frame 34 includes a fuel-tank supporting stay 47 welded at a front position to support the fuel tank 70. The under frame 34 also includes a step-floor supporting boss 45 on the upper face of each fuel-tank supporting stay 47 to support a front part of the step floor 11. The bracket 43 for the side stand 22 is welded to the left under frame 34 in the width direction of the vehicle.

The rear part of each under frame 34 continues to a rising part 37 that rises upward of the vehicle body. The upper ends of these rising parts 37 connect to the pair of left and right rear frames 41 that extends linearly rearward and upward of the vehicle body. The rear frames 41 are made of round pipes. A gusset 40 is welded between each rising part 37 and the corresponding rear frame 41, and the gusset 40 has a substantially triangle shape in side view of the vehicle body. A supporting pipe 38 is welded to the rising part 37 on the outside in the width direction of the vehicle, and the supporting pipe 38 supports the tandem step 38a. The vehicle body frame also includes a third cross pipe 39 on the front faces of the rising parts 37 and a fourth cross pipe 42 between the left and right rear frames 41. The third cross pipe 39 has a bending shape that protrudes forward of the vehicle body and joins the left and right rising parts 37. The fourth cross pipe 42 is made of square pipe.

The fuel tank 70 is placed closer to the front of the vehicle body, and has a front end 70a that is located under the center pipe 31 welded to the rear face of the head pipe 30. A feeding pipe 71 is placed on the upper face of the fuel tank 70, and is located below the gusset 32 at the center in the width direction of the vehicle.

Referring to FIG. 5, the first cross pipe 35 in front of the fuel tank 70 protects the front and lower part of the fuel tank and also functions as a supporting stay for various types of accessories. The left front frame 33 in the width direction of the vehicle includes a stay 44 on the inside. The stay 44 laterally supports an extension pipe (not shown) that is joined to the upper part of the feeding pipe 71.

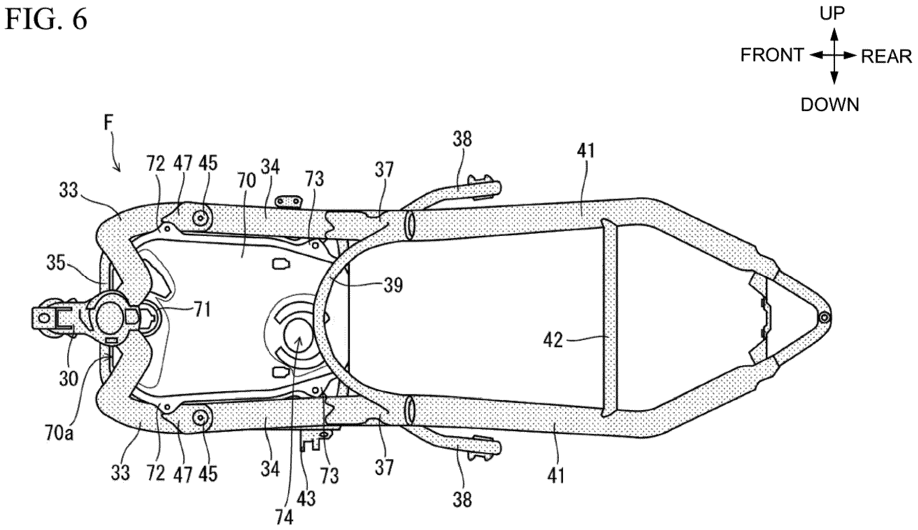

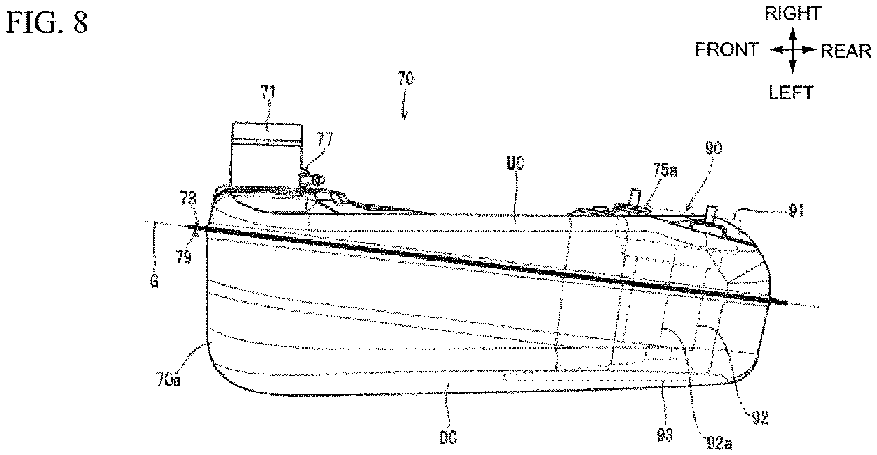

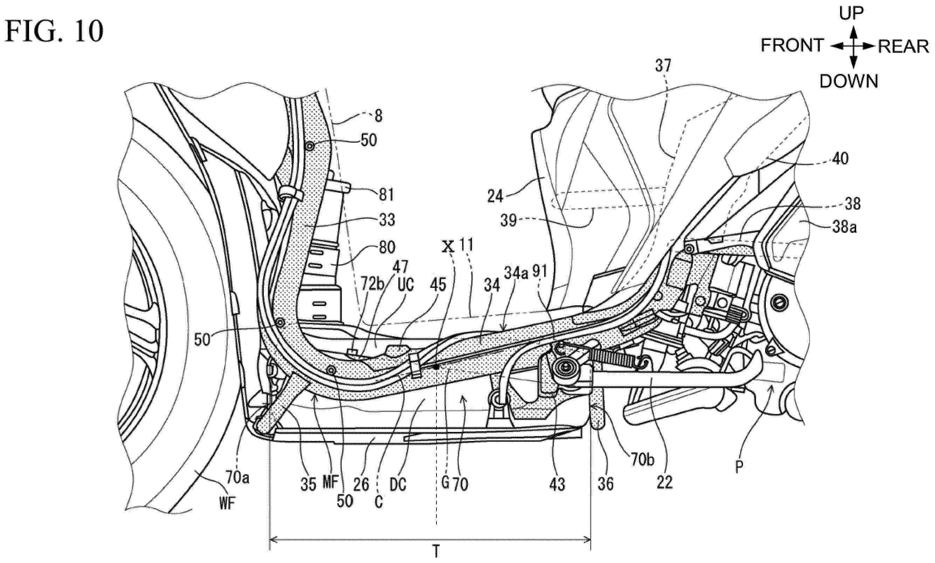

FIG. 6 is a plan view of the vehicle body frame F. The space between the front frames 33 of the main frames MF increases downward from the below of the head pipe 30 in the width direction of the vehicle. The space between the under frames 34, which extend rearward of the vehicle body from a position close to the front end of the fuel tank 70, decreases gradually rearward. The fuel tank 70 has front supporting parts 72 that protrude outward in the width direction of the vehicle at a part close to the front end, and the front supporting parts 72 come in contact with the upper faces of the fuel-tank supporting stays 47 at the under frames 34. The fuel tank 70 also has rear supporting parts 73 that protrude outward in the width direction of the vehicle at a part close to the rear end, and the rear supporting parts 73 are within the under frames 34 in the width direction of the vehicle. The fuel tank 70 includes the feeding pipe 71 on the upper face and at a position close to the front of the vehicle body, and an opening 74 on the upper face and at a position close to the rear of the vehicle body and on the left in the width direction of the vehicle. The opening 74 is for insertion and fixing of a fuel pump 90 (see FIGs. 8 and 10).

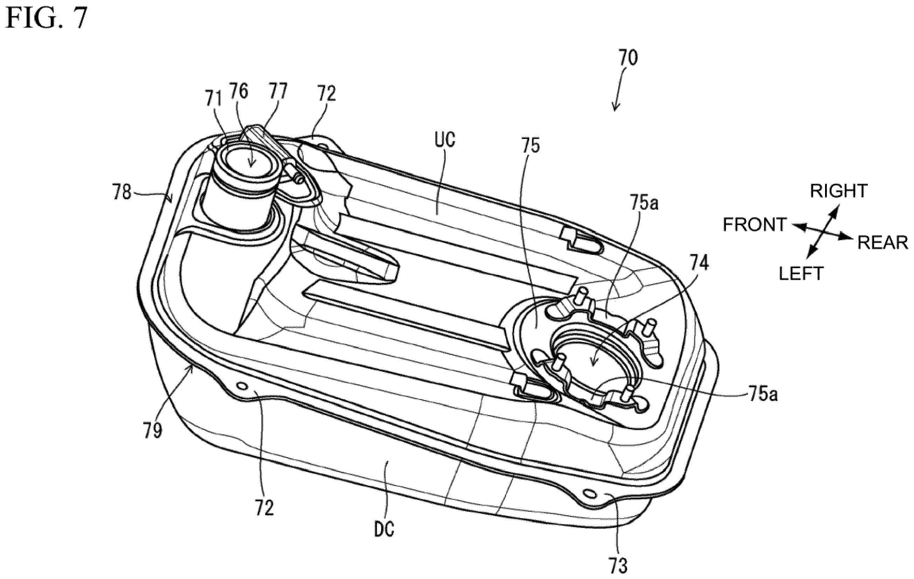

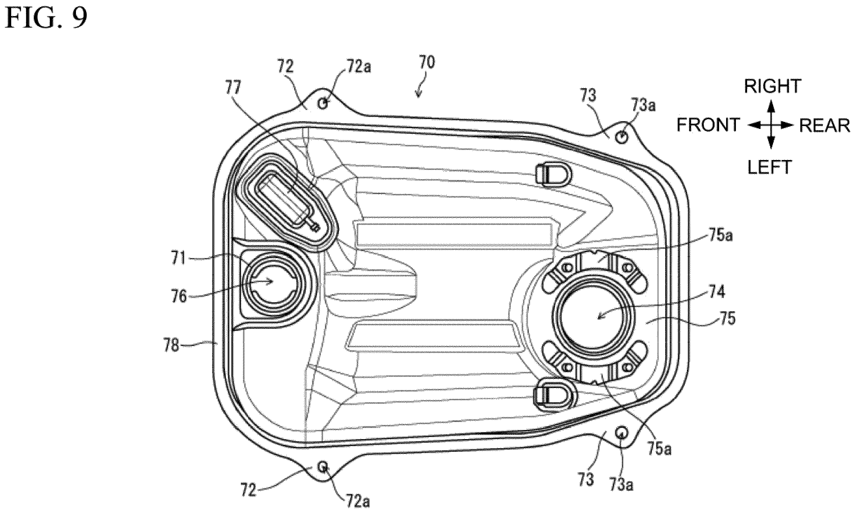

FIG. 7 is a perspective view of the fuel tank 70. FIG. 8 is a left side view of the fuel tank and FIG. 9 is a plan view of the fuel tank. The fuel tank 70 includes an upper half body UC and a lower half body DC that are manufactured by press-forming of a steel plate. More specifically the upper half body UC has an upper flange 78 around the lower edge, and the lower half body DC has a lower flange 79 around the upper edge. The fuel tank 70 can be formed by welding the entire peripheral faces of these upper flange 78 and lower flange 79. While the upper face and the lower face of the fuel tank 70 are substantially horizontally formed, the flange face G, which is the face where the upper flange 78 and the lower flange 79 bond together, defines a line that is inclined downward toward the rear in side view of the vehicle body.

The fuel tank 70 includes a breather mechanism 77 on the right of the feeding pipe 71 at the upper half body UC, and a fixing member 75a for the fuel pump 90 at a peripheral part 75 surrounding the opening 74 to insert the fuel pump 90. The fuel pump 90 includes a substantially cylindrical body 92, an upper end 91 located above the body 92 and fixed to the fixing member 75a, and a strainer 93 joined to the lower part of the body 92. The opening 74 and the fixing member 75a of the fuel tank 70 are inclined downward toward the rear so as to be substantially parallel to the flange face G in side view of the vehicle body, and accordingly the axial line 92a of the body 92 also is inclined toward the rear of the vehicle body.

The opening 74 to insert the fuel pump 90 is located above the flange face G in side view of the vehicle body. This can facilitate the manufacturing of a die for press-forming of the upper half body UC of the fuel tank 70 as compared with the configuration having an opening 74 to insert the fuel pump 90 that is located below the flange face G, and can increase the productivity of the fuel tank.

Referring to FIG. 9, the width of the fuel tank 70 decreases gradually from the front to the rear of the vehicle body in plan view of the vehicle body. Particularly the tapered angle increases at a position on the outside of the opening 74 in the width direction of the vehicle so as to narrow toward the rear of the vehicle body. In this way, the rear supporting parts 73 are quite displaced relative to the front supporting parts 72 to the inside in the width direction of the vehicle, so that the rear supporting parts 73 are within the under frames 34 in the width direction. Each of the front supporting parts 72 and the rear supporting parts 73 has through holes 72a and 73a, respectively, through which a fastening member, such as a bolt, passes.

FIG. 10 is a left side view of the attachment structure of the fuel tank 70. When the fuel tank 70 is placed at a predetermined position of the main frames MF, a front part of the fuel tank 70 is exposed above the under frames 34 in side view of the vehicle body. Whereas, a rear part of the fuel tank 70 is hidden inside of the under frames 34. This hides the upper end 91 of the fuel pump 90 as well inside of the under frames 34. More specifically the upper end 91 of the fuel pump 90 is located below the upper faces 34a of the under frames 34.

This means that the upper end 91 of the fuel pump 90 does not protrude above from the under frames 34, and so the step floor 11 can be lowered. More specifically if the upper end 91 of the fuel pump 90 protrudes above from the under frames 34, a structure to receive load applied to the step floor 11 has to be added to protect the upper end 91 of the fuel pump 90, and so this may heighten the position of the step floor. On the contrary, the upper end 91 of the fuel pump 90 of the present embodiment is located below the upper faces 34a of the under frames 34, and so the under frames 34 can receive the load applied to the step floor 11, and the step floor 11 can be brought closer to the fuel tank 70.

While the flange face G of the fuel tank 70 is inclined downward to the rear, the under frames 34 are inclined upward to the rear. This means that the flange face G and the axial line C of the under frames 34 intersect at intersection X. In the present embodiment, this intersection X is located substantially at the center of the dimension T of the fuel tank 70 in the front-rear direction. This makes the upper part of the fuel tank 70 on the rear side of the vehicle body located below the upper faces 34a of the under frames 34, but can make the upper part of the fuel tank 70 on the front side of the vehicle body located above the upper faces 34a of the under frames 34. In this way, the capacity of the fuel tank 70 can increase on the front part of the vehicle body.

The front frames 33 and the under frames 34 of the main frames MF define an acute angle at the bending part therebetween, so that the under frames 34 are inclined upward to the rear. This bending part of the present embodiment includes a piercing pipe 50 as a reinforcing member, and so the acute-angled bending part can have sufficient bending strength without a gusset or a patch. The piercing pipe 50 is a pipe as a reinforcing member having the size of about 1/4 of the main pipe. The piercing pipe 50 penetrates through the main pipe and is welded to the main pipe. The piercing pipe 50 may be disposed at one position or at a plurality of positions to increase the bending strength of the bending part.

As shown in FIG. 8, the body 92 of the fuel pump 90 is inclined relative to the vertical direction so as to reduce the dimension of the fuel pump 90 in the vertical direction. This can accommodate the fuel pump in a low-profile fuel tank 70. This can decrease the thickness of the step floor and so can improve the appearance of the motorcycle 1. This also can lower the step floor 11 and can increase the riding performance of the motorcycle.

Each of the front supporting parts 72 of the fuel tank 70 is fastened to the fuel-tank supporting stay 47 at the under frame 34 by means of a fastening member 72b, such as a bolt, that engages with the front supporting part from the above. The feeding pipe 71 of the fuel tank 70 engages with an extension pipe 80, and a removable cap 81 is attached to the upper end of the extension pipe 80.

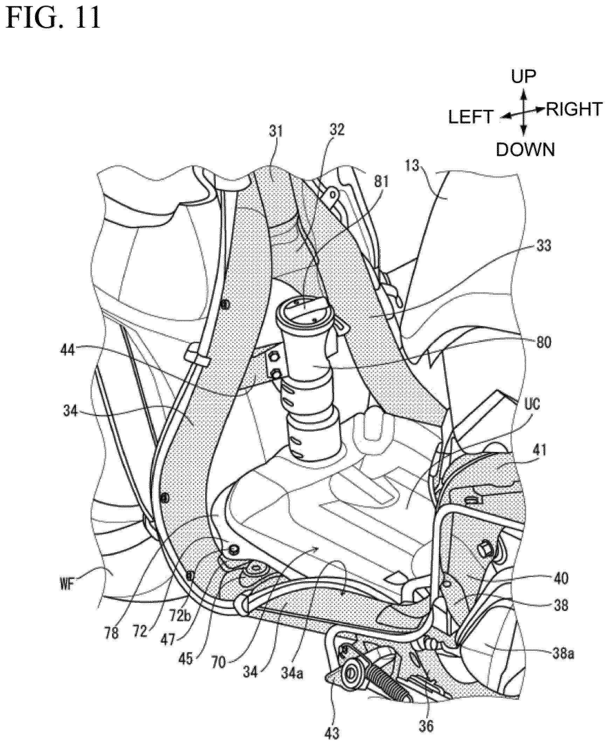

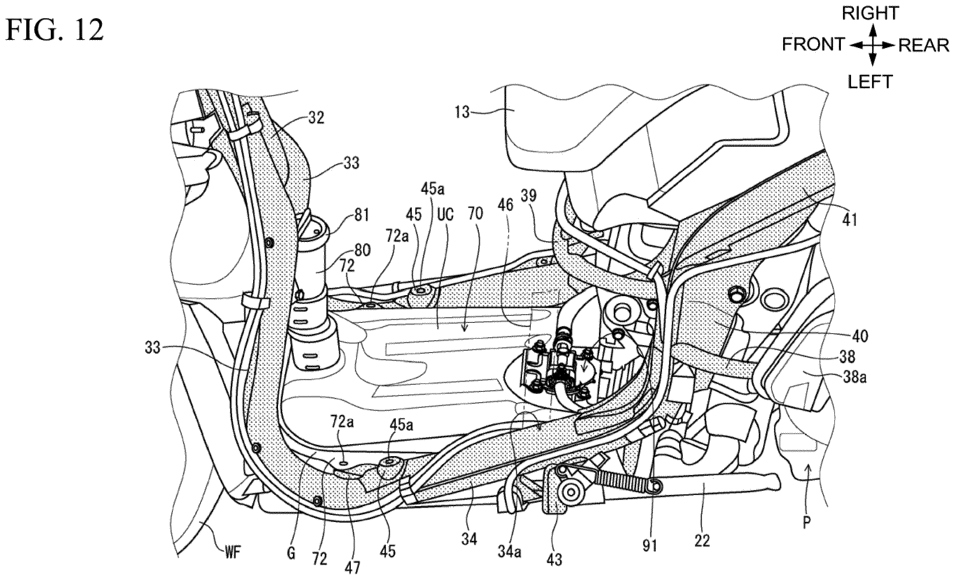

FIG. 11 is a perspective view of the attachment structure of the fuel tank 70 viewed from the rear of the vehicle body. FIG. 12 is a perspective view of the attachment structure of the fuel tank 70 viewed from the lateral of the vehicle body. The stay 44 on the inside of the left front frame 33 in the width direction of the vehicle supports the extension pipe 80. The removable cap 81 attached to the upper end of the extension pipe 80 is placed below and close to the gusset 32. The vehicle body frame F of the present embodiment does not have a large frame member between the left and right main frames MF, and so can place the fuel tank 70 as close to the front end of the vehicle body as possible. This can increase the capacity of the fuel tank and can increase load on the front wheel, and also can utilize the space between the left and right front frames 33 and the gusset 32 to place the extension pipe 80 of the fuel tank 70.

The space between the under frames 34 in the width direction of the vehicle decreases toward the rear of the vehicle body, and the width of the fuel tank 70 decreases toward the rear of the vehicle body. This can increase the capacity of the fuel tank 70 at a front part of the vehicle body easily, and can increase the front-wheel load, which tends to be smaller in a scooter-type motorcycle 1, to optimize the weight distribution between the front and the rear of the vehicle.

Referring to FIG. 12, the step-floor supporting bosses 45 each having an insertion hole 45a for a fastening member support a front part of the step floor 11, and the upper faces 34a of the left and right under frames 34 support a rear part of the step floor 11. While the upper end 91 of the fuel pump 90 protrudes above from the upper face of the fuel tank 70 as stated above, the under frames 34 supporting the step floor 11 on the rear side of the vehicle are located at a position spaced upward from the upper end 91 of the fuel pump 90. This configuration can avoid a contact of the lower face of the step floor 11 with the upper end 91 even in case where the step floor made of synthetic resin or the like is elastically deformed due to unexpected large load. The present embodiment further includes a cross plate 46 that joins the left and right under frames 34 above the upper end 91, and this cross plate 46 can protect the fuel pump 90 and the fuel hose more reliably.

Note here that the shape and the structure of the vehicle body frame, the shape and the structure of the fuel tank, and the inclination angles of the under frames and the flange face are not limited to the above embodiment, and they may be changed variously. For example, the main frames of the vehicle body frame may be made of a steel pipe having a round shape or a square shape in cross section or an aluminum material having various shapes. The fuel tank may be made of synthetic resin, for example. The structure of the vehicle body frame and the fuel tank of the present invention is applicable to saddled vehicles other than the scooter-type motorcycle as well, such as a three-wheeled scooter having two rear wheels or two front wheels.

### Reference Signs List

- 1: Motorcycle (saddled vehicle)
- 5: Steering handle
- 11: Step floor
- 13: Seat
- MF: Main frame
- 33: Front frame
- 34: Under frame (frame member)
- 34a: Upper face
- 47: Fuel-tank supporting stay
- 70: Fuel tank
- 74: Opening
- 75: Peripheral part
- 75a: Fixing member
- 90: Fuel pump
- 92: Body
- 91: Upper end
- UC: Upper half body
- DC: Lower half body
- C: Axial line of under frame
- G: Flange face
- T: Dimension of fuel tank in front-rear direction
- X: Intersection

## Claims

1. A saddled vehicle (1) comprising:
a step floor (11) between a steering handle (5) and a seat (13) such that a rider can place the legs on the step floor (11); and
a fuel tank (70) disposed under the step floor (11), wherein
the fuel tank (70) is disposed between a pair of frame members (34) in the width direction, the pair of frame members (34) extending under the step floor (11) in the front-rear direction,
the fuel tank (70) has an opening (74) at an upper part to insert a body (92) of a fuel pump (90),
the fuel pump (90) has an upper end (91) fixed to a peripheral part (75) of the opening (74),
the upper end (91) of the fuel pump (90) is located below the upper face (34a) of the frame members (34) in side view of a vehicle body, **characterized in that**,
the body (92) of the fuel pump (90) is inclined relative to the vertical direction in side view of the vehicle body,
the body (92) of the fuel pump (90) is inclined in side view of the vehicle body so that the lower part of the body (92) is located closer to the front end of the vehicle body than the upper part of the body (92),
the fuel tank (70) includes an upper half body (UC) and a lower half body (DC) that are bonded at a flange face (G),
the flange face (G) of the fuel tank (70) is inclined downward toward the rear of the vehicle body in side view of the vehicle body, and
the frame members (34) are inclined upward toward the rear of the vehicle body in side view of the vehicle body.

2. The saddled vehicle according to claim 1, wherein
the flange face (G) intersects an axial line (C) of the frame members (34) at a location in the dimension (T) of the fuel tank (70) in the front-rear direction in side view of the vehicle body.

3. The saddled vehicle according to claim 2, wherein the intersection (X) of the flange face (G) and the axial line (C) of the frame members (34) is located substantially at a center of the dimension (T) of the fuel tank (70) in the front-rear direction.

4. The saddled vehicle according to any one of claims 1-3 , wherein the space between the pair of frame members (34) in the width direction of the vehicle decreases toward the rear of the vehicle body, and
the dimension of the fuel tank (70) in the width direction of the vehicle decreases toward the rear of the vehicle body.

5. The saddled vehicle according to claim 2 or 3, wherein the opening (74) for insertion of the fuel pump (90) is located above the flange face (G) in side view of the vehicle body.

## Patentansprüche

1. Sattelsitzfahrzeug (1), das aufweist:
einen Fußabsetzboden (11) zwischen einer Lenkstange (5) und einem Sitz (13), sodass ein Fahrer die Füße auf dem Fußabsetzboden (11) absetzen kann; und
einen Kraftstofftank (70), der unter dem Fußabsetzboden (11) angeordnet ist, wobei
der Kraftstofftank (70) zwischen einem Paar von Rahmenelementen (34) in der Breitenrichtung angeordnet ist, wobei das Paar von Rahmenelementen (34) unter dem Fußabsetzboden (11) in der Richtung von vorne nach hinten verläuft,
der Kraftstofftank (70) eine Öffnung (74) an einem oberen Teil hat, um einen Körper (92) einer Kraftstoffpumpe (90) einzusetzen,
die Kraftstoffpumpe (90) ein oberes Ende (91) hat, das an einem Umfangsteil (75) der Öffnung (74) befestigt ist,
das obere Ende (91) der Kraftstoffpumpe (90) sich unter der oberen Fläche (34a) der Rahmenelemente (34) in der Seitenansicht einer Fahrzeugkarosserie befindet,
**dadurch gekennzeichnet, dass**
der Körper (92) der Kraftstoffpumpe (90) bezüglich der vertikalen Richtung in der Seitenansicht der Fahrzeugkarosserie geneigt ist,
der Körper (92) der Kraftstoffpumpe (90) in einer Seitenansicht der Fahrzeugkarosserie geneigt ist, sodass sich der untere Teil des Körpers (92) näher am vorderen Ende der Fahrzeugkarosserie als der obere Teil des Körpers (92) befindet,
der Kraftstofftank (70) einen oberen halben Körper (UC) und einen unteren halben Körper (DC) aufweist, die an einer Flanschfläche (G) gebondet sind,
die Flanschfläche (G) des Kraftstofftanks (70) nach unten zur Rückseite der Fahrzeugkarosserie in der Seitenansicht der Fahrzeugkarosserie geneigt ist, und
die Rahmenelemente (34) nach oben zur Rückseite der Fahrzeugkarosserie in der Seitenansicht der Fahrzeugkarosserie geneigt sind.

2. Sattelsitzfahrzeug nach Anspruch 1, wobei
die Flanschfläche (G) eine axiale Linie (C) der Rahmenelemente (34) an einer Position in der Abmessung (T) des Kraftstofftanks (70) in der Richtung von vorne nach hinten in der Seitenansicht der Fahrzeugkarosserie schneidet.

3. Sattelsitzfahrzeug nach Anspruch 2, wobei
der Schnittpunkt (X) der Flanschfläche (G) und der axialen Linie (C) der Rahmenelemente (34) sich im Wesentlichen an einer Mitte der Abmessung (T) des Kraftstofftanks (70) in der Richtung von vorne nach hinten befindet.

4. Sattelsitzfahrzeug nach einem der Ansprüche 1 bis 3, wobei
der Raum zwischen dem Paar von Rahmenelementen (34) in der Breitenrichtung des Fahrzeugs in Richtung der Rückseite der Fahrzeugkarosserie abnimmt, und
die Abmessung des Kraftstofftanks (70) in der Breitenrichtung des Fahrzeugs in Richtung der Rückseite der Fahrzeugkarosserie abnimmt.

5. Sattelsitzfahrzeug nach Anspruch 2 oder 3, wobei die Öffnung (74) zum Einsetzen der Kraftstoffpumpe (90) sich über der Flanschfläche (G) in einer Seitenansicht der Fahrzeugkarosserie befindet.

## Revendications

1. Véhicule à selle (1) comprenant :
un repose-pieds (11) entre un guidon de direction (5) et un siège (13) de sorte qu'un motocycliste puisse placer les jambes sur le repose-pieds (11) ; et
un réservoir de carburant (70) disposé sous le repose-pieds (11), dans lequel
le réservoir de carburant (70) est disposé entre une paire d'éléments de châssis (34) dans la direction de la largeur, la paire d'éléments de châssis (34) s'étendant sous le repose-pieds (11) dans la direction avant-arrière,
le réservoir de carburant (70) a une ouverture (74) au niveau d'une partie supérieure pour insérer un corps (92) d'une pompe à carburant (90),
la pompe à carburant (90) a une extrémité supérieure (91) fixée à une partie périphérique (75) de l'ouverture (74),
l'extrémité supérieure (91) de la pompe à carburant (90) est située en dessous de la surface supérieure (34a) des éléments de châssis (34) dans une vue latérale d'un corps de véhicule, **caractérisé en ce que**
le corps (92) de la pompe à carburant (90) est incliné par rapport à la direction verticale dans une vue latérale du corps de véhicule,
le corps (92) de la pompe à carburant (90) est incliné dans une vue latérale du corps de véhicule de sorte que la partie inférieure du corps (92) soit située plus près de l'extrémité avant du corps de véhicule que la partie supérieure du corps (92),
le réservoir de carburant (70) comporte un demi-corps supérieur (UC) et un demi-corps inférieur (DC) qui sont reliés au niveau d'une face de bride (G),
la face de bride (G) du réservoir de carburant (70) est inclinée vers le bas vers l'arrière du corps de véhicule dans une vue latérale du corps de véhicule, et
les éléments de châssis (34) sont inclinés vers le haut vers l'arrière du corps de véhicule dans une vue latérale du corps de véhicule.

2. Véhicule à selle selon la revendication 1, dans lequel
la face de bride (G) croise une ligne axiale (C) des éléments de châssis (34) à un emplacement dans la dimension (T) du réservoir de carburant (70) dans la direction avant-arrière dans une vue latérale du corps de véhicule.

3. Véhicule à selle selon la revendication 2, dans lequel le croisement (X) de la face de bride (G) et de la ligne axiale (C) des éléments de châssis (34) est situé sensiblement au niveau d'un centre de la dimension (T) du réservoir de carburant (70) dans la direction avant-arrière.

4. Véhicule à selle selon l'une quelconque des revendications 1 à 3, dans lequel l'espace entre la paire d'éléments de châssis (34) dans la direction de la largeur du véhicule diminue vers l'arrière du corps de véhicule, et
la dimension du réservoir de carburant (70) dans la direction de la largeur du véhicule diminue vers l'arrière du corps de véhicule.

5. Véhicule à selle selon la revendication 2 ou 3, dans lequel l'ouverture (74) pour l'insertion de la pompe à carburant (90) est située au-dessus de la face de bride (G) dans une vue latérale du corps de véhicule.
